# EUROPÄISCHE PATENTSCHRIFT

(11) **EP 1 804 999 B1**
(45) Veröffentlichungstag und Bekanntmachung des Hinweises auf die Patenterteilung: **29.01.2014**
(21) Anmeldenummer: 05796824.0
(22) Anmeldetag: 07.10.2005
(51) Int. Cl.: B29C 47/60, B29C 47/40, B29C 47/42

(54) **EXTRUDER**
EXTRUDER
EXTRUDEUSE

(30) Priorität: 26.10.2004 DE 102004052055
(43) Veröffentlichungstag der Anmeldung: 11.07.2007
(73) Patentinhaber: Blach Verwaltungs GmbH & Co. KG, 74348 Lauffen (DE)
(72) Erfinder: BLACH, Josef, A., 74348 Lauffen a.N. (DE)
(74) Vertreter: Berngruber, Otto
(86) Internationale Anmeldenummer: PCT/EP2005/010791
(87) Internationale Veröffentlichungsnummer: WO 2006/045412

(56) Entgegenhaltungen:
- WO-A-87/06523
- DE-A1- 2 236 902
- DE-A1- 2 513 015
- DE-A1- 3 709 798
- DE-A1- 3 940 954
- DE-A1- 4 444 370
- DE-B1- 2 340 499
- FR-A- 2 472 970
- US-A- 4 120 920
- US-A- 4 334 785
- US-A- 4 600 311
- US-A- 5 318 358
- US-A- 5 851 065
- US-A1- 2005 024 986
- US-A1- 2005 084 559

## Beschreibung

Die Erfindung bezieht sich auf einen Extruder zum kontinuierlichen Bearbeiten und/oder Verarbeiten von fließfähigen Stoffen, mit wenigstens zwei, gleichsinnig drehenden Wellen, die mit ineinandergreifenden Förderschneckensegmenten und Arbeitssegmenten versehen und in zu den Wellen parallelen kreissegmentförmigen Ausnehmungen des Extrudergehäuses geführt sind.

Die mit den Förderschneckensegmenten und den Arbeitssegmenten bestückten Wellen können dabei auch in einem Hohlraum im Extrudergehäuse längs eines Kreises mit gleichen Zentriwinkel angeordnet sein (EP 0 788 867 B1). Während die aus einzelnen Elementen gebildeten Förderschnecken segmente das im Extruder zu bearbeitende Material von der Materialzuführöffnung zu der Materialaustrittsöffnung am anderen Ende des Extruders fördern, haben die gleichfalls als einzelne Elemente ausgebildeten Arbeitssegmente eine bremsende und gegebenenfalls rückfördernde Funktion. Als Arbeitselemente können z. B. Knetblöcke, wie sie beispielsweise aus EP 0 422 272 A1 bekannt sind, oder sogenannte Blister, also Stauscheiben mit einem dem Schneckenaußendurchinesser entsprechenden Durchmesser verwendet werden, die auch als sogenannte Zahnscheiben mit einer Außenverzahnung am Umfang versehen sein können.

Anstelle solcher das Material komprimierender Arbeitselemente sind auch druckentlastende Arbeitselemente im Einsatz. So ist z. B. aus DE 102 33 213 A1 ein Schneckenelement bekannt, das einen förderneutralen, druckentlastenden Abschnitt aufweist, der durch einen Schneckenabtrag des Schneckenkamms gebildet wird.

Weitere Extruder sind aus den Dokumenten WO 01/62469 A1 und US 5672005 A bekannt.

Die Arbeitselemente, die für die verschiedenen Verfahrensaufgaben unterschiedliche Oberflächen aufweisen, können untereinander nahezu beliebig kombiniert werden, um der jeweiligen verfahrenstechnischen Gesamtanforderung optimal Rechnung zu tragen. Die Förderschneckenelemente und Arbeitselemente sind dicht aneinander gereiht und drehfest auf die Tragwellen aufgesteckt und werden, exakt radial und axial positioniert, vom Antrieb her koordiniert angetrieben.

Arbeitselemente werden aufgrund spezieller verfahrenstechnischer Anforderungen häufig auf Längen bis zu einem Sechstel des Schneckendurchmessers reduziert und sind nahezu immer kürzer als der Schneckendurchmesser. Andererseits kann zwischen den ineinander greifenden Arbeitselemente zwei benachbarter Wellen ein hoher Druck auftreten, insbesondere, wenn sie, wie beispielsweise rückfördernde Schneckenelemante, Knetblöcke, Blister oder Zahnscheiben, einen dem Schnittenaußendurchmesser entsprechenden Durchmesser besitzen. Dadurch treten bei Doppelschneckenextrudern im Bereich solcher Arbeitselemente Kräfte auf, die zu einer erheblichen Spreizung zwischen den Wellen führen. Diese Kräfte führen auch bei Mehrwellenextrudern, bei denen die Wellen längs eines Kreises mit gleichen Zentriwinkel angeordnet sind, zu einem erheblichen Verschleiß.

Aufgabe der Erfindung ist es, den überdurchschnittlichen Verschleiß im Bereich der Arbeitselemente zu reduzieren.

Dies wird erfindungsgemäß durch die Kombination der Merkmale im Anspruch 1 erreicht.

Das Arbeitssegment, das mit einem Förderschneckensegment zu einem kombinierten einstückigen Element vereinigt ist, kann dabei ein rückförderndes Arbeitselement mit einem dem Schneckendurchmesser entsprechenden Durchmesser, insbesondere ein Schneckensegment mit einer größeren Steigung als das Förderschneckensegment oder einem dem Förderschneckensegment entgegengesetzten Steigungsrichtung oder ein Knetblock, ein Blister oder eine Zahnscheibe sein. Jedoch können auch zwei Arbeitssegmente zu einem einstückigen Element vereinigt sein , z. B. zwei Knetblöcke entgegengesetzter Steigungsrichtung oder ein Schneckensegment mit entgegengesetzter Steigungsrichtung und ein Knetblock.

Durch die Vereinigung eines Förderschneckensegments und eines Arbeitssegments oder von zwei Arbeitssegmenten zu einem längeren kombinierten Element wird erfindungsgemäß die Biegesteifigkeit der Wellen wesentlich verbessert. Zugleich werden die Spreizkräfte auf eine größere, meist besser geschmierte Oberfläche verteilt und dadurch die Flächenbelastung und somit der Verschleiß wesentlich verringert. Zudem bringt die Kombination mehrerer verschiedener auf relativ kurzer Länge umsetzbarer verfahrenstechnischer Anforderungen in einem Segment eine entscheidende Reduktion der Teilezahl mit sich, was eine wesentliche Vereinfachung der Bestückung und wartung der Wellen sowie der Lagerhaltung zur Folge hat.

Um die Bestückung der Wellen zu vereinfachen, sind die Stirnflächen der erfindungsgemäß kombinierten Elemente durch Kreisbögen begrenzt, die dem Förderschneckendurchmesser, dem Förderschneckenkerndurchmesser und maximal dem Achsabstand der Wellen entsprechen. Die kombinierten Elemente können dann in einfacher Weise so auf die Wellen aufgesteckt werden, dass die durch die Kreisbögen begrenzten Stirnflächen miteinander fluchten. Damit ist ein fehlerfreies Aufstecken, der mit den kombinierten Elementen der benachbarten Wellen kämmenden kombinierten Elemente wesentlich erleichtert.

Damit die Vorteile der kombinierten Elemente hinsichtlich Biegesteifigkeit und Verschleiß zum Tragen kommen, weist das kombinierten Element eine Länge von mehr als dem Schneckendurchmesser, insbesondere von mehr als dem Doppelten des Schneckendurchmessers auf.

Das Förderschneckensegment des kombinierten Elements ist vorzugsweise zweigängig ausgebildet, da eine zweigängige Schnecke zu einer größeren Fördermenge als eine dreigängige Schnecke führt, gegenüber einen eingängigen Schnecke jedoch eine größere Biegefestigkeit besitzt.

Falls das Arbeitssegment des kombinierten Elements ebenfalls eine schneckenförmige Oberfläche aufweist, also z. B. ein Schneckensegment mit größerer Steigung oder entgegengesetzter Steigungsrichtung, ist es ebenfalls vorzugsweise zweigängig ausgebildet. Die Oberfläche des Arbeitssegments kann dabei auch lediglich einen schneckenähnlichen, spiralförmigen Verlauf aufweisen, beispielsweise bei Knetblöcken. So kann erfindungsgemäß z. B. ein Knetblocksegment mit zweigängig spiralförmig angeordneten Kurvenscheiben, die eine den Förderschnecken entsprechende Steigungsrichtung besitzen, mit einem zweigängigen Knetblocksegment mit entgegengesetzter Steigungsrichtung zu einem Element kombiniert sein.

Bei den hohen Temperaturen, denen das zu verarbeitende Material in dem Extruder ausgesetzt ist, dehnen sich die Wellen einerseits und die darauf sitzenden Förder- und Arbeitselement andererseits unterschiedlich aus. Dies hat die Bildung eines Spalts zwischen der Welle und den darauf sitzenden Elementen zur Folge, in welchem das aufgeschmolzene Material, beispielsweise Kunststoff, eindringen und gegebenenfalls verbrennen kann, jedenfalls die Welle mit den Elementen so fest verbinden kann, dass nach dem Abkühlen der Welle die Elemente nur noch sehr schwer von der Welle abgezogen werden können.

Dieses Problem wird bei den langen erfindungsgemäß verwendeten kombinierten Elementen noch wesentlich verstärkt, gegebenenfalls so weit, dass die Elemente gar nicht mehr abgezogen werden können, also die gesamte Welle verworfen werden muss.

Erfindungsgemäß ist daher vorzugsweise jede Welle in mehrere kürzere Wellenabschnitte geteilt, wobei die Wellenabschnitte unter Zug im Wellenkern axial verspannbar ausgebildet sind. Zur axialen Verspannbarkeit ist vorzugsweise an einem Ende des Wellenabschnitts in dem Wellenkern ein axial fixiertes Drehelement drehbar gelagert, das drehfest mit einem Außengewinde versehen ist, das in ein Innengewinde im Kern des benachbarten Wellenabschnitts eingreift. Dazu kann der Wellenabschnitt an einem Ende ein Drehelement mit dem Außengewinde und am anderen Ende das Innengewinde im Kern aufweisen. Auch können Wellenabschnitte vorgesehen sein, die an beiden Enden solche Drehelemente mit Außengewinde aufweisen und mit Wellenabschnitten verbunden werden, die an beiden Enden entsprechende Innengewinde im Kern aufweisen.

Im Wellenkern der Wellenabschnitt ist vorzugsweise eine Axialbohrung oder dergleichen Ausnehmung vorgesehen, um das Drehelement betätigen zu können. Dazu kann das Drehelement an seiner der Axialausnehmung des Wellenabschnitts zugewandten Seite mit einem Mehrkant oder einer Mehrkantausnehmung, beispielsweise einer Sechskantausnehmung oder -zapfen versehen sein, die bzw. der durch eine an ihrem Ende durch einen entsprechenden Gegenmehrkant versehene, in die Axialbohrung des Wellenkerns eingeführte Stange betätigt wird. Statt einer Mehrkantausnehmung oder einem Mehrkantzapfen kann selbstverständlich auch eine andere Betätigungsausnehmung oder ein anderer Betätigungsvorsprung an dem Drehelement vorgesehen sein, die bzw. der durch eine an ihrem Ende entsprechend ausgeführte in die Axialbohrung im Wellenkern eingeführte Stange betätigt wird.

Jeder Wellenabschnitt mit den darauf drehfest angeordneten Elementen ist drehfest mit dem benachbarten Wellenabschnitt verbunden. Dazu ist zwischen zwei benachbarten Wellenabschnitten eine formschlüssige drehfeste Verbindung vorgesehen, beispielsweise durch eine Kerb- oder Keilverzahnung am Außenumfang des Endes des Wellenkerns, an dem das Drehelement gelagert ist, wobei die Verzahnung am Außenumfang mit einer Kerb- oder Keilverzahnung in einer Nabenbohrung an dem Ende des benachbarten Wellenabschnitts zusammenwirkt, an dem das Innengewinde vorgesehen ist, in das das Außengewinde am Drehelement des benachbarten Wellenabschnitts eingreift.

Das kombinierte Element mit einem Arbeitssegment und wenigstens einem Förderschneckensegment und/oder wenigstens einem weiteren Arbeitssegment kann mit dem Wellenkern des Wellenabschnitts einstückig ausgebildet sein. Es ist jedoch auch möglich, den Schneckenkern des Wellenabschnitts zum drehfesten Aufstecken eines oder mehrerer kombinierter Elemente auszubilden.

Durch die erfindungsgemäßen kombinierten einstückigen Elemente wird somit die Biegesteifigkeit der Wellen auf eine bestimmte Länge wesentlich erhöht, so dass entstehende Querkräfte auf eine größere Mantelfläche besser verteilt werden und damit der Verschleiß verringert wird. Zudem wird erfindungsgemäß die Zahl der Bauteile reduziert, was sich bei der Lagerhaltung sowie Montage und Demontage vorteilhaft auswirkt. Ferner lassen sich kurze Arbeitssegmente, beispielsweise Arbeitssegmente mit einer Länge, die kleiner ist als die Hälfte des Förderschneckendurchmessers, integrieren, und auch solche, die nicht in das Typenraster fallen, z.B. wegen der Baulänge und/oder der Aufsteckposition. Aufsteckfehler können auch bei komplizierten Anordnungen sicher vermieden werden. Auch wird die Zahl der Dichtstellen drastisch reduziert und der Verfahrensraum ist auf eine bestimmte Maschinenlänge zu einer innen geführten Welle hin radial dicht.

Der erfindungsgemäße Extruder ist wenigstens als Zweiwellenextruder ausgebildet. Vorzugsweise weist er jedoch drei oder mehr in einem Hohlraum im Extrudergehäuse längs eines Kreises oder Kreisbogens mit gleichen Zentriwinkel angeordnete Wellen auf.

Nachstehend ist die Erfindung anhand der beigefügten Zeichnung beispielhaft näher erläutert. Darin zeigen
Figur 1 einen Längsschnitt durch einen Mehrwellenextruder;
Figur 2 einen Querschnitt entlang der Linie II-II in Figur 1;
Figur 3 und 4 eine Seitenansicht und eine Stirnansicht eines kombinierten Förderschnecken- und Arbeitselements;
Figur 5 und 6 eine Seitenansicht und eine Stirnansicht eines entsprechend Figur 1 kombinierten Elements, jedoch mit kurzem Arbeitssegment und damit anderer Stirnwand;
Figur 7 und 8 eine perspektivische Ansicht bzw. Stirnansicht eines aus einem Knetblocksegment mit einer und einem Knetblocksegment mit entgegengesetzter Steigung kombinierten Elements;
Figur 9 einen Querschnitt durch einen Zweiwellenextruder mit am ganzen Umfang dicht ineinandergreifenden Schneckensegmenten;
Figur 10 einen Längsschnitt durch einen Wellenabschnitt mit damit einstückig ausgebildetem kombinierten Element;
Figur 11 eine Ansicht des rechten Endes des Wellenabschnitts nach Figur 10;
Figur 12 eine der Figur 11 entsprechende Ansicht, jedoch von einem Wellenabschnitt mit einem auf dem Wellenkern aufgesteckten kombinierten Element;
Figur 13 einen Querschnitt entlang der Linie XIII-XIII in Figur 11; und
Figur 14 einen Längsschnitt durch eine Welle aus mehreren Wellenabschnitten mit aufgesteckten kombinierten Elementen.

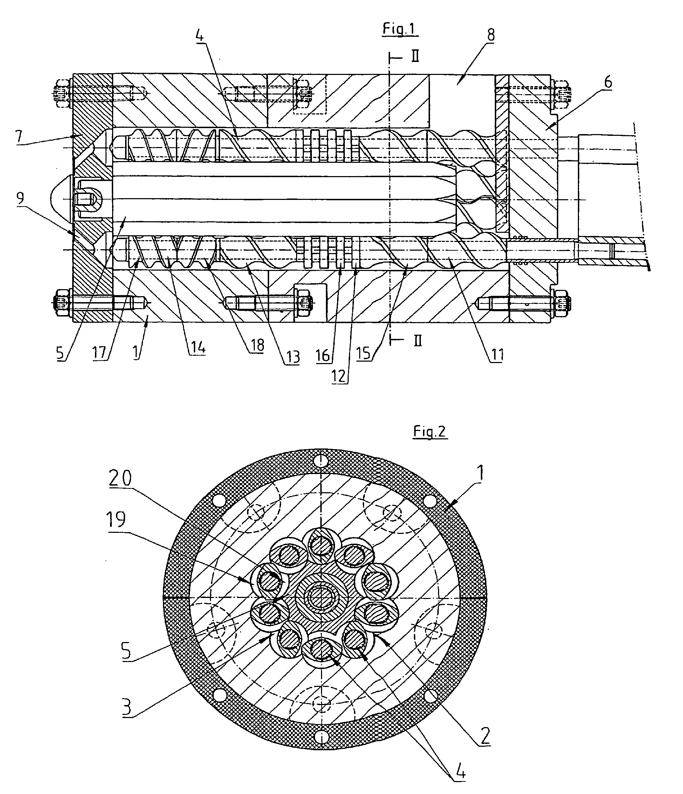

Gemäß Figur 1 und 2 weist ein Extruder in einem Gehäuse 1 einen Raum 2 auf, der sich längs eines Kreises 3 erstreckt. In dem Raum 2 ist eine Vielzahl achsparallel angeordneter Wellen 4 um einen Kern 5 angeordnet. Das Gehäuse 1 ist an den Stirnseiten mit Endplatten 6 und 7 verschlossen. Die sich durch die Endplatte 6 erstreckendenden Wellen 4 werden durch ein nicht dargestelltes Getriebe gleichsinnig angetrieben. Die Materialzuführöffnung ist mit 8 und die Materialaustrittsöffnung in der Endplatte 7 mit 9 bezeichnet.

Auf jede Welle 4 sind mittels einer Kerbverzahnung drehfest mehrere Elemente 11, 12, 13, 14 gesteckt. Während die Elemente 11 und 13 durch ein Förderschneckensegment gebildet werden, besteht das Element 12 aus einem Förderschneckensegment 15 und einem Knetblock 16 und das Element 14 aus einem Förderschneckensegment 17 mit größerer Steigung als die der Förderschneckenelemente 11 und 13 sowie einem kurzen Schneckensegment 18 mit entgegengesetzter Steigung. Das Knetblocksegment 16 und das kurze Schneckensegment 18 entgegengesetzter Steigung stellen Arbeitssegmente dar.
An der Innenseite des Gehäuses 1 und an dem Kern 5 sind achsparallele, kreissegmentförmige Ausnehmungen 19 bzw. 20 vorgesehen, in die die Förderschneckenelemente 11 und 13 und die kombinierten Elemente 12 und 14 mit geringem Spiel, also weitgehend dicht eingreifen. Zugleich greifen die Förderschneckenelemente 11 und 13 und die kombinierten Elemente 12, 14 weitgehend dicht ineinander.

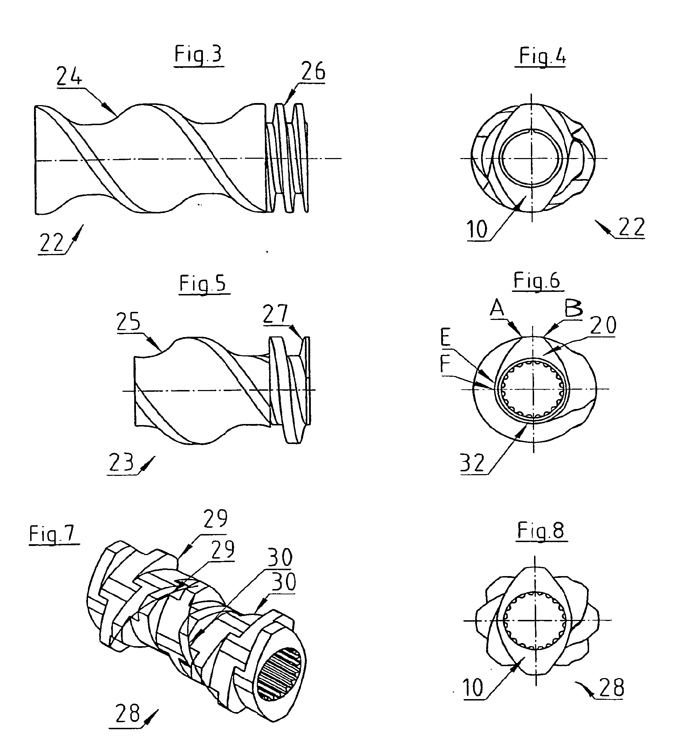

In Figur 3 und 4 sowie 5 und 6 sind zwei andere kombinierte Elemente 22, 23 aus einem Förderschneckensegment 24 bzw. 25 und einem Arbeitssegment 26 bzw. 27 dargestellt, die jeweils durch ein Schneckensegment mit größerer Steigung als die des Förderschneckensegments 24 bzw. 25 gebildet werden, wobei das Arbeitssegment 27 kürzer ausgebildet ist als das Arbeitssegment 26.

In Figur 7 und 8 ist ein kombiniertes Element 28 dargestellt, das aus einem Knetblocksegment 29 aus Kurvenscheiben, die, wie durch die gestrichelte Linie 29' angedeutet, mit einer Steigungsrichtung entsprechend einem Förderschneckenelement angeordnet sind, und einem Knetblocksegment 30 aus Kurvenscheiben, die, wie durch die gestrichelte Linie 30' angedeutet, mit entgegengesetzter Steigungsrichitung angeordnet sind, besteht. Das heißt, bei dieser Ausführungsform sind zwei Knetblocksegmente 29 und 30 als Arbeitssegmente unterschiedlicher Funktion zu einem Element 28 kombiniert.

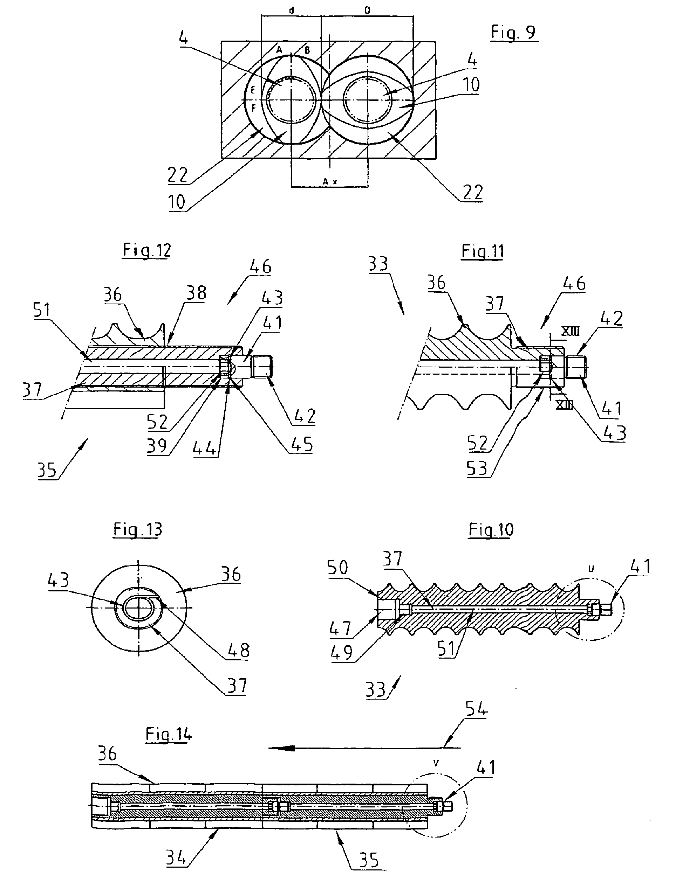

Wie in Figur 9 dargestellt, weisen zwei ineinander greifende kombinierte Elemente 22 eine Stirnfläche 10 auf, die durch die Kreisbögen A-B, E-F und A-E begrenzt wird. Der Kreisbogen A-B weist einen Durchmesser auf, der dem Schneckendurchmesser D entspricht, der Kreisbogen E-F einen Durchmesser, der dem Schneckenkerndurchmesser d entspricht und der Kreisbogen A-E einen Durchmesser, dessen Radius dem Achsabstand Ax der beiden kombinierten Elemente 22 entspricht (vergleiche EP-B-0002131). In gleicher Weise ist die Stirnfläche 10 der kombinierten Elemente 22 und 28 gemäß Figur 3 und 4 bzw. 7 und 8 ausgebildet.

Das kombinierte Element 23 gemäß Figur 5 und 6 weist ebenfalls eine Stirnfläche 20 auf, die durch die Kreisbögen AB, E-F' und A-E begrenzt wird, jedoch zusätzlich durch den Kreisbogen 32, der einem Halbkreis mit dem Schneckenkerndurchmesser entspricht.

Durch die aus diesen Kreisbögen gebildeten Stirnflächen der kombinierten Elemente wird die Bestückung der Wellen wesentlich vereinfacht, da die Elemente nur noch so aufgesteckt werden müssen, dass ihre Stirnflächen miteinander fluchten.

Jede Welle 4 ist in mehrere kurze Wellenabschnitte geteilt, die unterschiedlich ausgebildet sein können. So sind bei dem Wellenabschnitt 33 nach Figur 10 und 11 der Wellenkern 37 und das schematisch dargestellte kombinierte Element 36 einstückig ausgebildet, während bei den Wellenabschnitten 34, 35 nach Figur 12 und 14 die schematisch dargestellten kombinierten Elemente 36 auf dem Wellenkern 37 durch eine Keilverzahnung 38 drehfest aufgesteckt sind.

Die Wellenabschnitte 33, 34, 35 sind unter Zug im Wellenkern 37 axial verspannbar ausgebildet. Dazu ist an einem Ende jedes Wellenabschnitts 33, 34, 35 in einer Axialausnehmung 39 im Wellenkern 37 ein zylinderförmiges Drehelement 41 drehbar gelagert. An seinem aus der Axialausnehmung 39 ragenden Ende ist das Drehelement 41 mit einem Außengewinde 42 versehen.

Zur axialen Fixierung des Drehelements 41 ist ein Drahtrimg 43 vorgesehen, der einerseits in eine Umfangsnut 44 in der zylindrischen Axialausnehmung 39 im Wellenkern 37 und andererseits in eine Umfangsnut 45 am Außenumfang des zylindrischen Drehelements 41 eingreift.

Der Drahtring 43 wird, wie aus Figur 13 ersichtlich, gebildet, in dem durch eine tangentiale Bohrung 48 in dem Wellenkern 37 von der Seite ein Draht zwischen die Umfangsnuten 44, 45 geschoben wird.

Zur Verbindung der Wellenabschnitte ist, wie aus Figur 10 ersichtlich, an dem anderen Ende des Wellenabschnitts 33 im Wellenkern 37 ein koaxiales Innengewinde 49 vorgesehen, in das das koaxiale Außengewinde 42 des benachbarten Wellenabschnitts 33 schraubbar ist.

Um die Biegefestigkeit zu erhöhen, steht an dem Ende des Wellenabschnitts 33, an dem das Drehelement 41 angeordnet ist, der Wellenkern 37 axial vor, wobei der durch das vorstehende Wellenkernende 46 gebildete Axialzapfen in eine Axialausnehmung 47 in dem Ende des benachbarten Wellenabschnitts 33 gesteckt wird, wobei an der Innenseite der Axialausnehmung 47 die Axialausnehmung mit dem Innengewinde 49 vorgesehen ist.

Zur Betätigung des Drehelements 41 ist der Wellenkern 37 mit einer durchgehenden Axialbohrung oder dergleichen Ausnehmung 51 versehen. Das Drehelement 41 kann z. B. eine Sechs-Kant-Ausnehmung 52 aufweisen, in die ein nicht dargestellter Sechskant an einer Stange, die durch die Axialbohrung 51 eingeführt wird, gesteckt wird, um das Drehelement 41 zu drehen und dadurch das Außengewinde 42 entweder in oder aus dem Innengewinde 49 des benachbarten Wellenabschnitts 33 zu schrauben, um die benachbarten Wellenabschnitte zu verbinden oder voneinander zu trennen. Jeder Wellenabschnitt 33 ist mit dem benachbarten Wellenabschnitt 33 drehfest ausgebildet. Dazu ist gemäß Figur 11 an dem Zapfen 46 eine Keilverzahnung 53 vorgesehen, die in eine Keilverzahnung 50 in der Axialausnehmung 47 des benachbarten Wellenabschnitts 33 eingreift. Bei der Ausführungsform nach Figur 12 wird dazu die für die Elemente 36 verwendete Keilverzahnung 38 auf dem Wellenkern 37 verwendet.

In Figur 14 ist die Extrusionsrichtung mit dem Pfeil 54 bezeichnet. Die Richtung zur Montage der Welle aus den Wellenabschnitten 34, 35 entspricht ebenfalls der Richtung des Pfeils 54, während die Demontagerichtung dem Pfeil 54 entgegengesetzt ist. Es ist ersichtlich, dass die Enden der Wellenabschnitte 34, 35, bezogen auf die Extrusionsrichtung 54, jeweils an dem strornaufwärtigen Ende mit dem Drehelement 41 versehen sind.

## Patentansprüche

1. Extruder zum kontinuierlichen Bearbeiten und/oder Verarbeiten von fließfählgen Stoffen, mit wenigstens zwei parallelen, gleichsinnig drehenden Wellen (4), die mit ineinander greifenden Förderschneckensegmenten (11, 13, 15, 24, 25) und Arbeitssegmenten (16, 18, 26, 27, 29, 30) versehen sind und In zu den Wellen (4) parallelen kreissegmentförmigen Ausnehmungen des Extrudergehäuses geführt sind wobei die Arbeitssegmente (16, 18, 26, 27, 29, 30), die durch ein Schneckensegment (26, 27) mit einer größeren Steigung als die Förderschneckensegmente (11, 13, 15, 24, 25), ein rückförderndes Schneckensegment (18) mit entgegengesetzter Steigungsrichtung, einen Knetblock (16, 29, 30), einen Blister oder eine Zahnscheibe gebildet sind, mit einem Förderschneckensegment (15, 24, 25) und/oder einem weiterem Arbeitssegment (30, 29) kombinierte einstückige Elemente (12, 14, 22, 23, 28, 36) bilden, und wobei das kombinierte Element (12, 14, 22, 23, 28, 36) eine Länge aufweist, die größer als der Förderschneckendurchmesser (D) ist, **dadurch gekennzeichnet, dass** die Stirnflächen (10, 20) der kombinierten Elemente (12, 14, 22, 23, 28, 36) durch Kreisbögen (A-B, E-F und A-E) begrenzt sind, weiche dem Förderschneckendurchmesser (D) dem Förderschneckenkemdurchmesser (d) und maximal dem Achsabstand (Ax) der Wellen (4) entsprechen, wobei die kombinierten Elemente (12, 14, 22, 23, 28, 36) so auf die Wellen (4) aufgesteckt sind, dass die durch die Kreisbögen (A-B, E-F und A-E) begrenzten Stirnflächen (10, 20) miteinander fluchten.

2. Extruder nach Anspruch 1, **dadurch gekennzeichnet, dass** das kombinierte Element (14, 22, 23, 28) zweigängig ausgebildet ist.

## Claims

1. Extruder for the continuous treatment and/or processing of free-flowing materials with at least two parallel shafts (4) rotating In the same direction which are provided with interlocking screw-conveyor segments (11, 13, 15, 24, 25) and working segments (16, 18, 26, 27, 29, 30) and are guided in recesses of the extruder housing which are parallel to the shafts (4) and shaped as circle segments, wherein the working segments (16, 18, 26, 27, 29, 30) consisting of a screw segment (26, 27) with a greater pitch than the screw-conveyor segments (11, 13, 15, 24, 25), a refeed screw segment (18) with an opposite pitch direction, a kneading block (16, 29, 30), a blister or a toothed disk form single-piece combined elements (12, 14, 22, 23, 28, 36) with one screw-conveyor segment (15, 24, 25) and/or one additional working segment (30, 29), and wherein the combined element (12, 14, 22, 23, 28, 36) has a length which is greater than the screw-conveyor diameter (D), **characterized in that** the faces (10, 20) of the combined elements (12, 14, 22, 23, 28, 36) are delimited by circular arcs (A-B, E-F and A-E) which correspond to the screw-conveyor diameter (D), the screw-conveyor core diameter (d) and are not larger than the center distance (Ax) of the shafts (4), wherein the combined elements (12, 14, 22, 23, 28, 36) are attached to the shafts (4) In such a manner that the faces (10, 20) delimited by the circular arcs (A-B, E-F and A-E) are aligned with each other.

2. Extruder according to claim 1, **characterized in that** the combined element (14, 22, 23, 28) is formed as a double lead.

## Revendications

1. Extrudeuse pour traiter et/ou transformer en continu des matériaux fluides, comportant au moins deux arbres (4) parallèles tournant dans le même sens qui sont pourvues de segments de transporteur à vis sans fin (11, 13, 15, 24, 25) et de segments de travail (16, 18, 26, 27, 29, 30) qui s'engrènent les uns dans les autres et qui sont guidés dans des évidements du boîtier de l'extrudeuse, en forme de segments de cercle et parallèles aux arbres, les segments de travail (16, 18, 26, 27, 29, 30) qui sont formés par un segment de vis sans fin (26, 27) présentant une inclinaison plus grande que les segments de transporteur à vis sans fin (11, 13, 15, 24, 25), par un segment de vis sans fin (18) de refoulement avec direction d'inclinaison opposée, par un bloc de pétrissage (16, 29, 30), par un blister ou une rondelle dentée, et qui forment avec un segment de transporteur à vis sans fin (15, 24, 25) et/ou un autre segment de travail (30, 29) des éléments d'un seul tenant combinés (12, 14, 22, 23, 28, 36), et l'élément combiné (12, 14, 22, 23, 28, 36) présentant une longueur qui est plus grande que le diamètre (D) du transporteur à vis sans fin, **caractérisée en ce que** les faces frontales (10, 20) des éléments combinés (12, 14, 22, 23, 28, 36) sont limitées par des arcs de cercle (A-B, E-F. et A-E) qui correspondent au diamètre (D) de transporteur à vis sans fin, au diamètre (d) de transporteur à vis sans fin et au maximum à la distance d'axe en axe (Ax) des arbres (4), les éléments combinés (12, 14, 22, 23, 28, 36) étant enfichés de telle sorte sur les arbres (4) que les faces frontales (10, 20) limitées par les arcs de cercle (A-B, E-F. et A-E) sont alignés l'une à l'autre.

2. Extrudeuse selon la revendication 1, **caractérisée en ce que** les éléments combinés (14, 22, 23, 28,) sont réalisés à filet double.
